# EUROPEAN PATENT APPLICATION

(11) **EP 2 743 380 A1**
(43) Date of publication of application: **18.06.2014**
(21) Application number: 12824269.0
(22) Date of filing: 10.08.2012
(51) Int. Cl.: C25C 7/00

(54) **MINI CLEANING APPLIANCE FOR CLEANING TWO-PHASE OR THREE-PHASE AEROSOL FLOWS GENERATED IN AN ELECTROLYTIC CELL FOR PRODUCING METALS**

(30) Priority: 12.08.2011 CL 19782011
(71) Applicant: New Tech Copper S.A., Macul, Santiago (CL)
(72) Inventor: AYLWIN GÓMEZ, Pedro Alejandro, Santiago (CL); CALDERÓN GUTIÉRREZ, César Antonio, Antofagasta (CL)
(74) Representative: Delorme, Nicolas
(86) International application number: PCT/CL2012/000042
(87) International publication number: WO 2013/023318

(57) **Abstract**

The metal production processes that are carried out in electrolytic cells, release aerosols of two or three phases into the environment that incorporate micro drops of the components of the electrolyte used to produce the metals, one of whose components is generally an acid or a strong base.

The difficulties associated with these aerosols are varied and affect the operators, structures and production equipment. Therefore the operators must protect their respiratory system using masks and protect their eyes using goggles. The structures suffer corrosion, as does the equipment required for the process and the manipulation of supplies and products.

The measures currently adopted to mitigate the problems consist of placing beads of expanded polystyrene or other substances on the surface of the electrolyte, and installing extraction systems in the cells, which, in turn, generate other problems as the surface of the cell remains in contact with the environment.

This invention consists of enclosing the upper area of the anodes using a fabric sleeve, open at its upper and lower ends, located inside unitary bells with side holes that face the holes of perforated extraction ducts located on both sides of the cell, in an anode and cathode support structure, which are connected to the normal extraction system of the production bay, thus preventing the aerosols from reaching the environment.

## Description

The production of metals by electrolytic means is currently executed mostly by depositing the metal ion on a stainless steel plate (cathode), by applying a continuous electric current between that cathode and another metal or metal alloy plate (anode), both submerged in an aqueous solution generally acid (electrolyte) of the metal to be deposited. When the anode used is insoluble, we speak of electrowinning the metal from the electrolyte, while when the anode used is made of the same metal to be obtained, we speak of electrorefining.

In both cases, once the amount of metal deposited on the cathode has reached an adequate thickness, the cathodes are removed from the solution and the deposit is removed from the stainless steel plate to obtain the product. The surface accumulation of a metal on another with decorative purposes or to protect from corrosion is also executed in cells with different electrolytes, in which the anode is the metal to be deposited and the cathode is the object to be protected or decorated. There is also the case that the anode is of a metal or insoluble compound and the metal to be deposited comes from the electrolyte in which it is dissolved.

These same processes are also used in the treatment of liquid waste, to reduce the number of positive ions until they are below the accepted limits for discarding them.

The operating conditions and those of the electrolyte are adjusted with a view to optimizing the deposit on the cathode. Thus the acidity or alkalinity, concentration of metal, temperature and the stirring of the solution are adjusted with this purpose. These characteristics of the solution, and principally the chemical reaction produced, originate a loosening of an acid or basic aerosol, as the case may be, from the free surface of the electrolyte. In the case of electrowinning of copper, the anodic reaction produced in the electrolytic cells generates oxygen, which forms bubbles that carry micro-drops of acid solution into the environment, thus forming the acid aerosol. The presence of this aerosol causes health problems for the operators, problems in the process and corrosion of the structures and equipment. Efforts have been made to mitigate these negative effects with different measures, but none of these have solved the problem satisfactorily and some of them have even been the origin of another type of problem, as is described below.

The fact that the electrolyte is generally heated to temperatures of about 40 or more degrees Celsius increases its evaporation into the environment, forming an aerosol that drags micro drops and particles contained in it. In an attempt to minimize the free surface of the electrolyte to reduce the evaporation, beads of expanded polystyrene or another low density material are sprinkled on the free surface of the electrolyte where they float. These beads are the origin of other problems such as, for example, when they are suctioned together with the electrolyte by the circulation pumps they affect their operation; or when they are positioned between the anodes and cathodes they can produce short-circuits, affecting the normal operation of the process; also generating an irregular surface in the copper deposit in the upper area. In replacement of the polystyrene beads or others, Chilean patent application 01869-2002 has proposed the use of a solution based on essence of soap bark that is incorporated into the electrolyte altering its composition. Other compounds that have been proposed to reduce the surface tension are non ionic surfactants such as in Chilean Patent Application N° 00328-2006, anti-fogging compounds with sulfate or sulphonate ends as in Chilean Patent Application N° 02892-2007, addition of anti-foamers as in Chilean Patent Application N° 02684-1999, fluoroaliphatic surfactants as in Chilean Patent Application N° 00580-1995.

Another type of solution proposed is the covers with or without extraction of the aerosols by suction, as in Chilean Patent Application N° 2518-2005 that proposes plastic covers that float on the electrolyte and on whose free face an element is adhered that traps the fog, or as in Chilean Patent Application N° 02451-2007 that suggests the use of multiple covers, at the rate of two for each anode, or the thermal cover as in Chilean Patent N° 44803, or the insulating hood submerged in the electrolyte of Chilean Patent N° 36367, or like the one indicated in US Patent 5609738(A) that consists of a multi-element system of covers that are located under the connecting bars of the electrodes and that suck up the aerosol between the level of the electrolyte and that cover located under the busbars.

Another trend is the employment of air injected via one side of the cell, together with aspiration by the other side, as indicated in US Patent 5855749(A).

Another trend is to cover the surface of each anode with fiber bags, sealed to the upper part of the anode above the level of the electrolyte, as in US Patent 6120658.

A large part of the advantages that it is hoped to obtain with these improvements are diminished by the increased complexity of manufacturing together with the greater production and operating cost with those systems, or because of the alteration of the electrolyte's composition.

### DESCRIPTION OF THE DRAWINGS

Figure 1 shows a side elevation of the electrolytic cell unit of the laboratory, with one anode and two cathodes, one of which is connected to the current, showing a diagrammatic view of the movement of the bubbles in the lead anode, which, when they reach the surface, are attracted toward the connected cathode.
Figure 2 shows a side elevation of the electrolytic cell unit of the laboratory, with one anode and two cathodes, one of which is connected to the current, showing a diagrammatic view of the movement of the bubbles in the lead anode, when a bell has been placed in the upper area, around the anode.
Figure 3 shows a front elevation of an anode in the electrolytic cell unit of the laboratory, showing a diagrammatic view of the movement of the bubbles on the right border of the lead anode, when an angular bell has been placed in the upper area, around the anode.

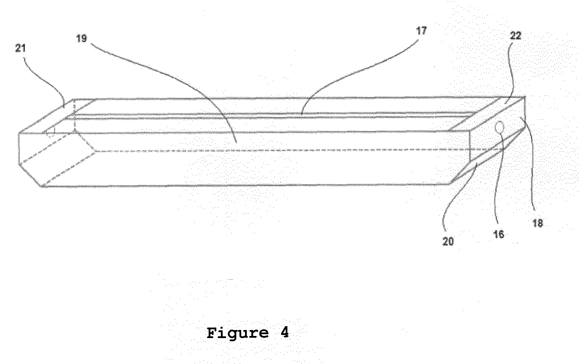

Figure 4 shows a perspective view of the bell with inferior angle and lateral holes.
Figure 5 shows a side elevation of the electrolytic cell unit of the laboratory, with one anode and two cathodes connected, showing a diagrammatic view of the movement of the bubbles in the lead anode, when a double angular bell has been installed in the upper area of the anode and the anode has been covered with a cloth sleeve, open at its upper and lower ends.

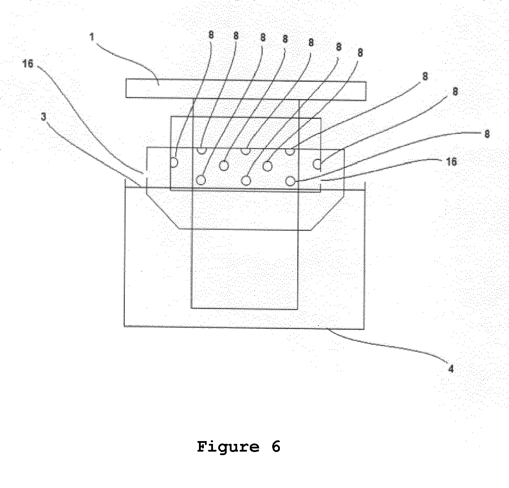

Figure 6 shows a front elevation of an anode of the electrolytic cell unit of the laboratory, in which a double angular bell has been placed in the upper area, around the anode.

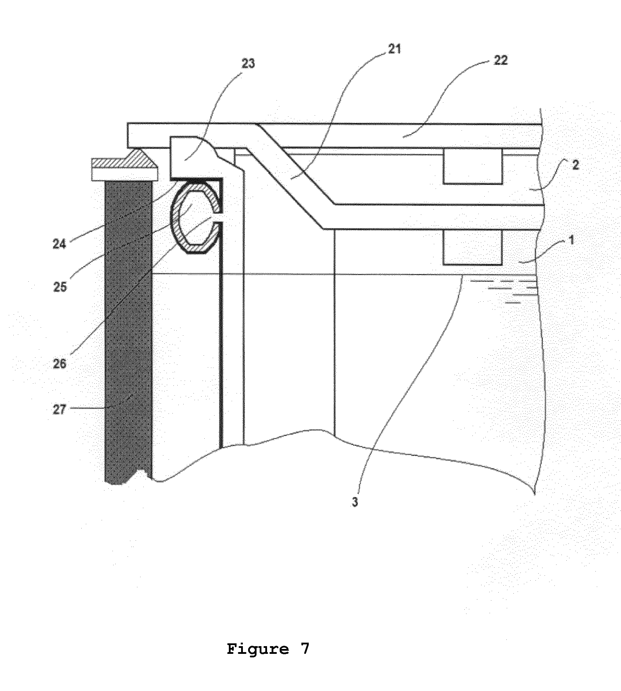

Figure 7 shows a partial vertical sectional view of one end of the anode and cathode support structure, in which suction perforation can be seen.
Figure 8 shows a detailed perspective view of one end of the anode and cathode support structure, to which longitudinal perforated ducts have been incorporated on both sides of the structure.
Figure 9 shows a perspective view of one end of the anode and cathode support structure, to which the aerosol collecting ducts have been incorporated.

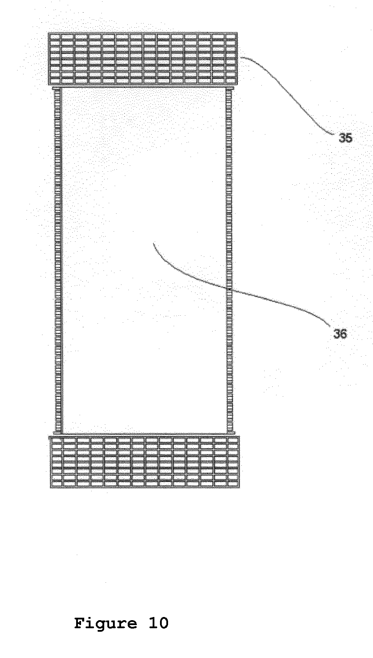

Figure 10 shows an upper plan view of the electrolytic production cell, with its upper cover and the protections on its ends.

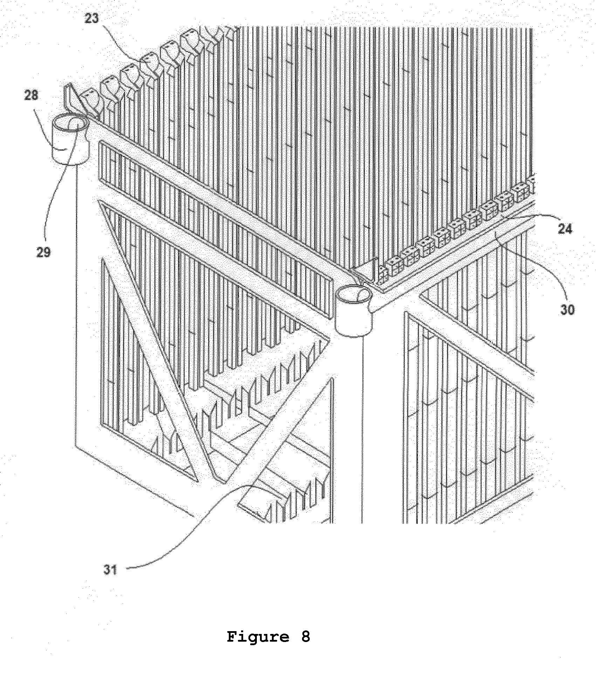

The numbers indicated in the Figures have the following meaning:
1. Lead laboratory anode
2. Stainless steel laboratory cathode.
3. Electrolyte level in the Laboratory cell.
4. Lower level of the Electrolyte
5. Upper vertical wall of the exterior bell.
6. Straight vertical wall of the interior bell.
7. Cloth sleeve, anode covering.
8. Perforation of the vertical wall of the interior bell of the anode.
9. Inclined bottom wall of the anode's exterior bell.
10. Bubble generated on the anode's wall.
11. While rising, the bubble has distanced itself from the anode.
12. Space for accumulation and bursting of bubbles, above the electrolyte level on the sloping side of the bell.
13. Low energy bubble escape area.
14. Aerosol filtration area via the layer of foam accumulated in the interior of the straight bell that is located above the level of the electrolyte.
15. Low energy bubble accumulation area.
16. Perforation in the vertical exterior wall of the bell.
17. Groove of the exterior bell for passage of the anode.
18. Vertical exterior transversal wall of the bell.
19. Vertical exterior longitudinal wall of the bell.
20. Sloping inferior exterior transversal wall of the bell.
21. Upper left horizontal crosspiece of the bell.
22. Upper right horizontal crosspiece of the bell.
23. Cathode guide rail that rests on the upper longitudinal angle of the structure, in whose groove the cathodes of the electrolytic cell for industrial production of metals are inserted.
24. Upper longitudinal angle, of insulating material, of the anode and cathode support structure, under which the perforated duct for aerosol suction is located.
25. Perforated longitudinal duct for aerosol suction, identical to duct 30 of Figure 8.
26. Perforation of the longitudinal suction duct located in front of each anode of the cell for electrolytic production of metals.
27. Longitudinal wall of the cell for electrolytic production of metals.
28. Terminal outlet end to the suction duct of the aerosol collector.
29. Open end of the longitudinal perforated suction duct, connected to the terminal outlet end to the suction duct of the aerosol collector.
30. Perforated longitudinal aerosol suction duct.
31. Inferior guide for anode.
32. American coupling type connection, which connects the terminal of the longitudinal perforated suction duct with the outlet duct to the suction collector.
33. Outlet duct to the suction collector.
34. End of the cell's suction duct that is connected to the production plant's suction system.
35. Protection of the collecting ducts of the aerosol outlet.
36. Cover of the electrolytic cell for producing metals.

### DESCRIPTION OF THE INVENTION

This invention is situated in the field of electrolytic deposition of metals, which, being generally applicable, is especially applicable in those cases that use an anode and cathode supporting structure inside the cell. It consists of covering each anode with individual bells, open at their upper and lower ends, provided or not provided with sleeves made of hydrophilic fabric.

This invention is based on the grounds given below:

### 1. Comments

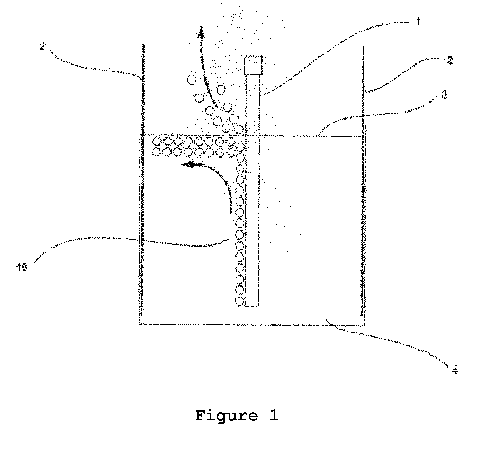

A lead anode 1, such as the one illustrated in Figure 1, generates large amounts of bubbles in the electrowinning process as a consequence of the semi anodic reaction of oxidation of the anions. These bubbles rise at great speed on the anode's surface towards the free surface of the electrolyte in the cell. In the area close to the free surface of the electrolyte, the bubbles act in different ways. The careful observation of the combined different behaviors of the bubbles has been the basis that gave origin to this invention of a Mini Purification Equipment of acid or basic aerosols, in situ. Of the various principal mechanisms that have been considered in the design of the Mini Purification Equipment, that help to reduce the acid concentration of aerosols, the following three mechanisms are the main ones:
a) Decreased energy of the bubbles that continue their path in the electrolyte.
b) Filtration of aerosols through the layer of foam formed.
c) Filtering of aerosols originated by explosion of bubbles inside the bell.

### a. Decreased energy of the bubbles that continue their path in the electrolyte:

There is a reduction of the energy in the bubble as it reaches the surface, through the reduction of its speed due to the increase in its path, and therefore a greater time in friction with the environment. The longer path and therefore the bubble's greater time of residence in the electrolyte permit reducing its energy before it reaches the surface of the liquid, and the bubble gets closer to the surface with an ascent speed much lower than the bubble's start-up speed (immediately after it is originated on the anode's surface). Therefore, if a bubble arrives very close to the surface, it will not have sufficient energy to burst and cause the acid or basic aerosol. There is a favoring of coalescence, permitting a greater probability of fading due to the increase of its radius and therefore a diminution of the pressure differential; as well as a greater frictional force with the liquid, helped by the longer path. The increase in the residence time of the bubbles in the space of the electrolyte that is found inside the bell permits an encounter between the bubbles, thus favoring coalescence. When this phenomenon occurs, the bubbles increase in size and therefore their radius. An increase in the radius of the bubbles reduces the pressure differential (external and internal) of the bubble with regard to the external environment and thereby favors the fading of the bubble in the liquid. On the other hand, the tractive force is increased with the increase of the radius, also increasing the probability of bursting in the liquid. In both cases, the coalescence permits reducing the bubble's bursting energy when it reaches the surface.

### b) Filtration of aerosols through the layer of foam formed.

The design of the interior part of the purifier where the fabric used has been placed permits the formation of foam, with the help of the pressure and capillarity; this foam filters the aerosols that originate in the electrolyte and use this path to escape into the environment. By observation of the model employed for the experiments, one can say that approximately 90% of the aerosols that emanate pass through the layer of foam, and a large part of the remaining 10% come from the surface of the electrolyte via the lateral sectors (borders).

### c) Filtering of aerosols originated by explosion of bubbles inside the bell.

The wall of the sack of the inner capillary tube (with holes in the walls) permits filtering the aerosols originating from the bubbles that burst on the surface of the liquid present inside the bell. After the aerosols pass through the sack, they pass through a second filter: the foam layer. Also, a large part of these bubbles are the result of coalescence, a phenomenon that permits a reduction of the explosion energy of the bubble when it reaches the surface.

### 2. Bell with lower angle and lateral holes.

The principal aerosol mitigation mechanism is the reduction of the energy of the bubbles that continue on their path in the electrolyte, as explained in paragraph a) of Item 1.

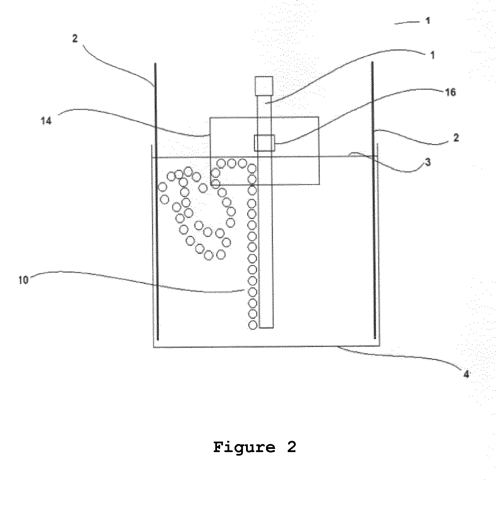

In one the embodiments of the invention, the upper area of the anode 1 has been covered with a bell having straight vertical walls, such as that illustrated in Figure 2, that has a perforation 16 in the faces pointing towards the longitudinal walls of the electrolytic cell.

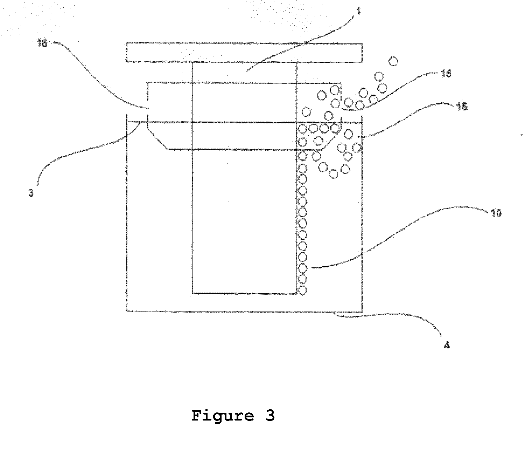

In a second embodiment of the invention, the upper area of the anode 1, that crosses the groove 17, has been covered with a bell with vertical walls 5, in its upper area, which continues downwards with sloping planes 9, towards the center, symmetric on both sides of the anode, such as the one illustrated in Figure 3, with perforations 16 in the faces pointing towards the longitudinal walls of the electrolytic cell. This bell is located above the level 3 of the electrolyte, while the sloping planes remain submerged inside the electrolyte.

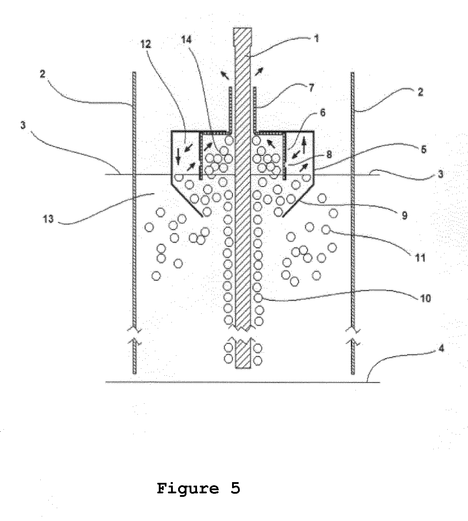

In a third embodiment of the invention, the anode 1 is covered with a bell having straight vertical walls 5 above the level of the electrolyte 3 in its upper area, continuing downward with walls at an angle 9, closing towards the center in the lower portion submerged in the electrolyte, with a second bell of straight vertical walls 6 inside it, with perforations 8 in their longitudinal faces, in which the interior faces of the interior bell are covered with hydrophilic fabric 7, in which the fabric extends upwards like a collar, surrounding the anode 1. (See Figure 5.)

In a fourth embodiment of the invention, the anode is covered with a bell of straight vertical walls, made of fabric, in which its lower area remains submerged in the electrolyte.

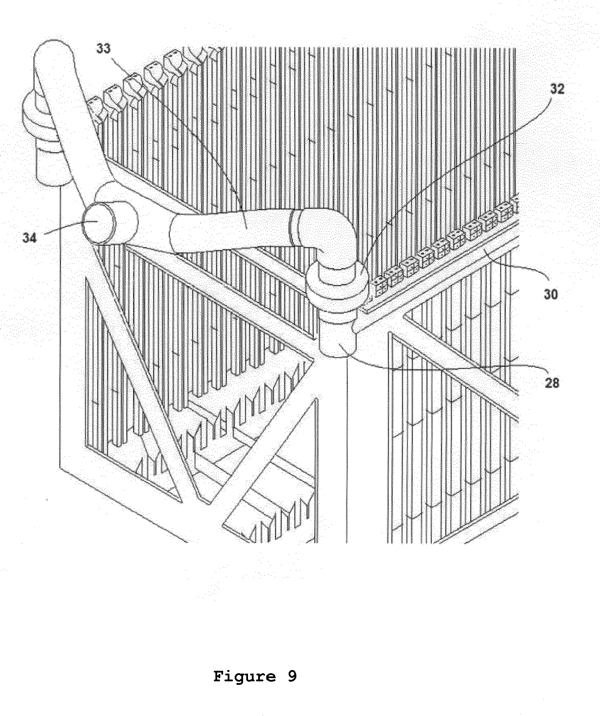

This invention is complemented particularly well when it is used in plants that use an anode and cathode supporting structure inside the masonry cell, such as the one illustrated in Figures 8 and 9, whose upper longitudinal borders are made of angle forms 24, in which, on the interior side of the structure, a multiplicity of guide cathodes 23 are fixed and on the interior side of the angles 24 individual perforated ducts 30 are attached with as many perforations 26 as anodes 1 are employed in the cell, perforation that point toward the interior of the cell, between each two successive guide cathodes, facing each anodic position, which are defined by a multiplicity of guide anodes 31, attached to the floor of the anode and cathode supporting structure.

The open ends 29 of these ducts end up in the terminals 28 that are connected by means of American couplings 32 to the outlet ducts of aerosols to the suction collector 33 that finishes in the end of the suction duct of the cell 34 that is connected to the suction system of the production plant.

Optionally, an upper cover 36 is sometimes placed over the cell, which confines the aerosol between the cover, the level of the electrolyte and the side and front walls of the cell. This cover has some grids 35 at its ends that serve as protection for the ducts that connect the cell with the production plant's suction system.

### EXAMPLE OF APPLICATION

In order to experimentally test the benefits of the mini purifier, two experiments were carried out at laboratory level in which, using an industrial electrolyte typical of the electrowinning of copper, that involves high contents of sulfuric acid, an acid aerosol was generated using a lead anode. This aerosol was first collected directly and then passed through the mini purifier that is the motive of this invention.

The comparison of the results of both experiments shows, as we shall see in detail later, an effectiveness of more than 90% in the cleaning of the acid aerosol.

The experiments were carried out under the following conditions:
Current density: 360 A/m²
Voltage: 2.3 V
Electrolysis time: 4 hours
Concentration of sulfuric acid (H₂SO₄): 180 g/l
Concentration of copper (Cu): 45 g/l
Electrolyte temperature: 45 °C
Material of the anode: Lead (Pb)
Material of the cathode: stainless steel 316 L

The mini purifier was submerged 1.9 cm in the electrolyte.

In the experiment in which the mini purifier was used, an acid aerosol was obtained with a concentration of H₂SO₄ equivalent to less than 1 mg/cubic meter of air at normal conditions, that is, at 25 °C, at sea level at 45° geographical latitude (which is abbreviated as NCM, Normal Cubic Meter).

In the experiment in which the mini purifier was not used, an acid aerosol was obtained with a concentration of H₂SO₄ equivalent to 7000 mg/NCM.

Consequently, it was proved that the use of the mini purifier that is the object of this invention, in its preferred embodiment, nonlimiting, used in these experiments, is very efficient in mitigating, practically eliminating the acid aerosol or acid fog that is customary in the obtaining of copper by electrowinning.

It is worth remembering that Supreme Decree N° 594 fixes the limit of acid mist at 0.8 mg/NCM and grants an adjustment for altitude of 0.55 mg/NCM for plants that are located in high places close to the mountain range.

## Claims

1. Mini purifying equipment to reduce the transference into the environment of aerosol flows of two or three phases, generated in an electrolytic cell for metal production, that includes closing off the upper part of the anodes with bells and fabric sleeves, **CHARACTERIZED in that** the bells cover the upper area of the lateral faces and the vertical borders of an anode, and fabric sleeves located over the anode inside the bells are open at the upper and lower ends, where the lower end of the bell and of the fabric sleeve are inserted in the electrolyte.

2. Mini purifying equipment to reduce the transference into the environment of aerosol flows of two or three phases, generated in an electrolytic cell for metal production, that includes closing off the upper part of the anodes with bells and fabric sleeves, according to claim 1, **CHARACTERIZED in that** the covering of the anodes is provided by unitary bells having straight vertical walls, open from below, and with an upper horizontal wall with a longitudinal groove.

3. Mini purifying equipment to reduce the transference into the environment of aerosol flows of two or three phases, generated in an electrolytic cell for metal production, that includes closing off the upper part of the anodes with bells and fabric sleeves, according to claim 1, **CHARACTERIZED in that** the covering of the anodes is provided by unitary bells having straight vertical walls, over the electrolyte and at an angle that closes towards the center and downward, **in that** the lower portion is submerged in the electrolyte.

4. Mini purifying equipment to reduce the transference into the environment of aerosol flows of two or three phases, generated in an electrolytic cell for metal production, that includes closing off the upper part of the anodes with bells and fabric sleeves, according to claim 1, **CHARACTERIZED in that** the covering of the anodes is provided by unitary bells having straight vertical walls above the level of the electrolyte, and at an angle that closes towards the middle, **in that** the lower portion is submerged in the electrolyte, with a second bell having straight vertical walls inside it.

5. Mini purifying equipment to reduce the transference into the environment of aerosol flows of two or three phases, generated in an electrolytic cell for metal production, that includes closing off the upper part of the anodes with bells and fabric sleeves, according to claim 1, **CHARACTERIZED in that** the covering of the anodes is provided by unitary bells having straight vertical walls above the level of the electrolyte, and at an angle closing towards the middle and downwards in the inferior portion submerged in the electrolyte, with a second bell of straight vertical walls inside it, in which also, the interior walls of the interior bell are surfaced with fabric.

6. Mini purifying equipment to reduce the transference into the environment of aerosol flows of two or three phases, generated in an electrolytic cell for metal production, that includes closing off the upper part of the anodes with bells and fabric sleeves, according to claims 1 and 5, **CHARACTERIZED in that** the covering of the anodes is provided by unitary bells having straight vertical walls above the level of the electrolyte, and at an angle that closes towards the center and downward, in the lower portion submerged in the electrolyte; with a second bell inside it having straight vertical walls, with perforations in its walls, in which the interior walls of the interior bell are surfaced with fabric, in which the fabric extends like a collar, surrounding the anode upward.

7. Mini purifying equipment to reduce the transference into the environment of aerosol flows of two or three phases, generated in an electrolytic cell for metal production, that includes closing off the upper part of the anodes with bells and fabric sleeves, according to claims 1 and 5 and 6, **CHARACTERIZED in that** the covering of the anodes is provided by unitary bells having straight vertical walls above the level of the electrolyte, with a lower portion submerged in the electrolyte and a second bell having straight vertical walls inside it, with perforations in its walls.
